# EUROPEAN PATENT APPLICATION

(11) **EP 2 975 536 A1**
(43) Date of publication of application: **20.01.2016**
(21) Application number: 14177073.5
(22) Date of filing: 15.07.2014
(51) Int. Cl.: G06F 17/30

(54) **Method for determining if a web address corresponds to a single content item or to a content aggregation portal**

(71) Applicant: Alcatel Lucent, 92100 Boulogne-Billancourt (FR); INRIA - Institut National de Recherche en Informatique et en Automatique, 78153 Le Chesnay Cedex (FR)
(72) Inventor: Ben Houidi, Zied, 91620 Nozay (FR); Scavo, Giuseppe, 95024 Acireale (IT); Cruz Teixeira, Renata, 75005 Paris (FR)
(74) Representative: Cabinet Camus Lebkiri

(57) **Abstract**

The present invention relates to a method for determining if a web address, named "tested web address", contained in a web content request of a stream of web content requests corresponds to a single item, each web content request comprising a web address and a timestamp, each web address being formed by a characters string, the method comprising the following steps:
- (102) applying a first test, named "character test", on the characters string of the tested web address, the character test having a positive result if the web address is considered as a single item, the character test having a negative result if the tested web address has a negative result.

## Description

### FIELD OF THE INVENTION

The invention concerns a method for determining if a web address corresponds to a single content item or to a content aggregation portal.

### BACKGROUND

Web addresses, also called URLs (Uniform Resource Locator), enable to reference web contents: HTLM documents, images, sounds, advertisements, etc.

Media and Content Curation is a process of using automatic and human resources to sort, organize and present interesting content to end users. This new trend in the web landscape has emerged the last couple of years, as a response to the huge amount of content that is in the web today. It is indeed becoming more and more impossible today for the single individual to distil all the information that it receives to get only the relevant ones.

One interesting element to decide if a web page should be recommended to end user is the knowledge of if it is a content aggregation portal or a single item. As a matter of fact, it is rarely relevant to recommend content aggregation portals to users whereas it is advantageous to recommend single content item to users. A content aggregation portal, also named "aggregation portal" is a web page that aggregate content and that consequently contains several different news. On the contrary, a single content item, also named, "single item" is a web page dealing with a specific subject matter and that is consequently interesting to recommend to users.

None of the known method of the prior art enable to make the distinction between portals that aggregate content and individual content items that are more interesting to recommend to users. This is the purpose of the current invention.

### SUMMARY OF THE INVENTION

The invention aims at providing a method enabling to distinguish between the names of contents that correspond to (A) platforms that aggregate content, e.g. a news platforms that relates to many news, compared to (B) specific individual content items, e.g. a web page that relates to a single news.

This invention also aims at providing such a method for determining if a web address corresponds to a content aggregation portal or to a single content item by passive observation of a computer network traffic.

Another aspect of the invention aims at providing a method of distinction that may be applied online, on the fly, as the content traffic is flowing.

To that purpose, a first aspect of the invention concerns a method for determining if a web address, named "tested web address", contained in a web content request of a stream of web content requests corresponds to a single item or to an aggregation portal, each web content request comprising a web address, each web address being formed by a characters string, the method comprising the following steps:
- applying a first test, named "character test", on the characters string of the tested web address, the character test having a positive result if the tested web address is considered as a single item, the character test having a negative result if the tested web address is considered as an aggregation portal.

This first method enables to classify the web addresses according to their structure and more precisely according to the structure of their characters string itself. Consequently, this first method only analyzes the characters string forming the tested web address and if the character string has at least one feature corresponding to a single item, the tested web address is considered as a single item. On the contrary, if the characters string has features corresponding to an aggregation portal, the tested web address is considered as an aggregation portal. This method is particularly advantageous because it may be applied with a limited amount of data since it only need to know the characters string that form the web address to determine if the tested web address is a single item or an aggregation portal.

The method may then comprise a step of recommending to final users the tested web address if it is considered as a single item. On the contrary, if the tested web address is considered as an aggregation portal, it is discarded.

The method may further comprise a step of recording in a database the tested web address if it considered as being an aggregation portal. This database may then be used for the future web address to test: a future web address to test may then be compared to the web addresses of the database. If the future web address to test corresponds to one of the web addresses of the database, the future web address to test is considered as being an aggregation portal and no further test is performed on this future web address to test. On the contrary, if the future web address to test does not correspond to any of the web addresses of the database, a method according to an aspect of the invention is applied to the future web address to test in order to determine if it is a single item or an aggregation portal.

The method according to the first aspect may also comprise one or several of the following technical features taken individually or according all possible technical combinations.

According to a first embodiment, the step of applying the character test may comprise the following steps:
- determining a length of the characters string of the tested web address;
- comparing the determined length with a length threshold;
- if the determined length is superior to the length threshold, the character test has a positive result;
- if the determined length is inferior to the length threshold, the character test has a negative result.

This first embodiment relies on the fact that aggregation portals have generally shorter names that single items. The length threshold is preferably determined during a learning step, wherein the threshold length starting from which a web address is considered as an aggregation portal is determined thanks to a set of web addresses that are already known as being aggregation portals or singles items. This first embodiment is particularly advantageous because it may be applied online.

According to a second embodiment, each characters string comprises at least a substring, named "hostname substring", corresponding to a hostname, the step of applying the character test comprising the following steps:
- checking if the characters string of the tested web address is reduced to the hostname substring or if it comprises at least one other characters substring;
- if the characters string of the tested web address comprises at least one other characters substring, the character test has a positive result;
- if the characters string of the tested web address is reduced to the hostname substring, the character test has a negative result.

This second embodiment proposes then to check if the tested web address matches the hostname. As a matter of fact, web addresses traditionally contain a hostname part. It is generally the domain name where specific requests need to be addressed. More of the time, aggregation portals have a web address that matches the hostname, while singles items have a web address that comprises other substrings in addition of this hostname substring. This embodiment proposes then to consider as aggregation portals the web addresses that match the hostname while the web addresses that have additional substrings are considered as single items. This second embodiment may also be applied online.

According to a third embodiment, the step of applying the character test on the tested web address comprises the following steps:
- determining an appearance number corresponding to a number of times when the characters string of the tested web address appears as a characters substring in web addresses of other web content requests of the stream;
- comparing the appearance number with an appearance threshold;
- if the appearance number is inferior to an appearance threshold, the character test has a positive result;
- if the appearance number is superior to the appearance threshold, the character test has a negative result.

This embodiment is based on the fact that most of the time the web addresses of aggregation portals frequently appear as substring in other web addresses. This embodiment proposes then to count how many times the characters string of the tested web address appears as characters substring of other web address and to consider the tested web address as an aggregation portal if it appears a number of times superior to an appearance threshold. On the contrary, if the characters string appears less than the appearance number as substring in other web addresses, it is considered as a single item. The appearance threshold is preferably determined during a learning step, wherein the appearance threshold starting from which a web address is considered as an aggregation portal is determined thanks to a set of web addresses that are already known as being aggregation portals or singles items. This embodiment is applied offline since it needs to analyze several web addresses to have a relevant result.

A second aspect of the invention concerns a method for determining if a web address, named "tested web address", contained in a web content request of a stream of web content requests corresponds to a single item or to an aggregation portal, each web content request comprising a web address and a timestamp, the method comprising the following steps:
- detecting the timestamps of the web content requests of the stream that contains as web address the tested web address;
- determining a time series with the detected timestamps,
- applying a second test, named "time series test", on the determined time series, the time series test having a positive result if the tested web address is considered as a single item, the time series test having a negative result if the time series test is considered as an aggregation portal.

The method according to the second aspect proposes then to exploit the frequency of appearance of the tested web address in the web content requests of the stream. This aspect of the invention is based on the fact that aggregation portals are visited on a much more regular basis, typically daily, compared to single items which are bounded in time. As a matter of fact, the time series of the tested web address corresponds to a sequence of appearance in time of the tested web address in web content requests of the stream. We may then determine by applying the time series test if the frequency of appearance of the tested web address corresponds to an aggregation portal or to a single item. The second aspect of the invention may be applied alone or in conjunction with the first aspect of the invention.

Advantageously, the method according to the first aspect of the invention is implemented online.

The method according to the second aspect of the invention may then comprise a step of recommending to final users the web addresses that are considered as single item, while the web addresses that are considered as aggregation portals are discarded. As explained for the method according to the first aspect of the invention, the method according to the second aspect of the invention may comprise a step of recording in a database the tested web address if it considered as being an aggregation portal. This database may then be used for the future web address to test: a future web address to test may then be compared to the web addresses of the database. If the future web address to test corresponds to one of the web addresses of the database, the future web address to test is considered as being an aggregation portal and no further test is performed on this future web address to test. On the contrary, if the future web address to test does not correspond to any of the web addresses of the database, a method according to an aspect of the invention is applied to the future web address to test in order to determine if it is a single item or an aggregation portal.

The method according to the second aspect of the invention may also comprise one or several of the following features taken individually or in combination.

According to a first embodiment, the step of applying the time series test comprises the steps of:
- comparing the determined time series with reference time series;
- if the determined time series corresponds to one of the reference time series, the time series test has a negative result;
- if the determined time series does not correspond to any of the reference time series, the time series test has a positive result.

Advantageously, the step of comparing the determined time series with one of the reference time series comprises a step of:
- computing a cross correlation of the determined time series with each of the reference time series, the determined time series being considered as corresponding to said reference time series if the cross correlation for said reference time series has a result equal to 1, the determined time series being considered as not corresponding to said reference time series if the cross correlation for said reference time series has a result equal to 0.

According to a second embodiment, the step of applying the time series test comprises a step of:
- determining a periodicity for the determined time series;
- comparing the determined periodicity with reference periodicities;
- if the determined periodicity corresponds to one of the reference periodicities, the time series test has a negative result;
- if the determined periodicity does not correspond to any of the reference periodicities, the time series test has a positive result.

Advantageously, the method according to the second aspect of the invention is implemented offline.

The embodiments of the method according to the first aspect of the invention and/or the embodiments of the method according to the second aspect of the invention may be used independently or in conjunction as features of a classifier enabling to classify the web addresses in two classes: a first class corresponding to the web addresses considered as singles items and a second class corresponding to the web addresses considered as aggregation portals.

When the method according to the first aspect of the invention is combined with the method according to the second aspect of the invention, the character test is preferably implemented online, while, the time series test is preferably implemented offline. In this case, the time series test runs in the background to feed the reference database, while the character test runs online for web addresses that are not in the reference database.

A fourth aspect of the invention also concerns a classifier configured to implement a method according to one of the aspect of the invention.

### BRIEF DESCRIPTION OF THE DRAWINGS

Some embodiments of methods in accordance with embodiments of the present invention are now described, by way of example only, and with reference to the accompanying drawings, in which:
- figure 1 schematically represents the steps of a method according to a first embodiment of the first aspect of the invention;
- figure 2 schematically represents the steps of a method according to a second embodiment of of the first aspect of the invention;
- figure 3 represents the steps of a method according to a third aspect of the first aspect of the invention;
- figure 4 represents the steps of a method according to an embodiment of a second aspect of the invention.

### DESCRIPTION OF EMBODIMENTS

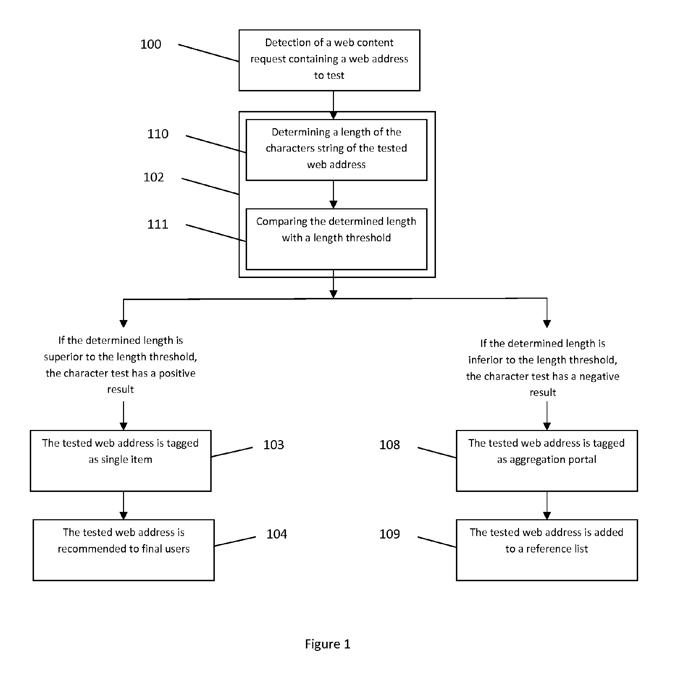

A first embodiment of the first aspect of the invention will now be described by reference to figure 1.

This first embodiment enables to classify a web address included in a web content request of stream of web content requests thanks to the passive observation of a computer network traffic.

To that purpose, this first method comprises a first step 100 of detecting a web content request containing a web address. This web address will be named "tested web address".

The method may then comprise a first step of comparing the tested web address with each of the web addresses of a reference list stored in a database. The reference list contains web addresses known as corresponding to aggregation portals. For example, the reference list may comprise the following web addresses:
- www.nytimes.com ;
- www.google.com;
- www.lemonde.com;
- www.diewelt.de ;
- www.derspiegel.de/international/ ...

If the tested web address corresponds to one of the web addresses of the reference list, the tested web address is considered as being an aggregation portal.

If the tested web address corresponds to none of the web addresses of the reference list, the method comprises a step 102 of applying a first test on the tested web address. This first test is named "character test". If the character test has a positive result, the tested web address is considered as a single item whereas if the character test has a negative result, the tested web address is considered as an aggregation portal. The character test is performed on the characters strings forming the tested web address.

As a matter of fact, each web address is formed by a string of characters, named "characters string". The characters string of a single item presents features that are different of the characters string of an aggregation portal.

More precisely, the embodiment of figure 1 relies on the fact that, statistically, aggregation portals have shorter web addresses than single items. For examples, the aggregation portal http://www.nytimes.com have a shorter web address than the single item htttp://www.nytimes.com/2014/07/04/business/jobs-data-for-june-released-by-labor-department.html?hp&action=click&pgtype=Homepage&version=LedeSu m&module=first-column-region&region=top-news&WT.nav=top-news& r=0

The first embodiment proposes then to determine, during a learning step, a length threshold from which a web address is probably a single item. To that purpose, we determine, either manually or automatically, the length of several web addresses for which we already know if it is a single item or an aggregation portal. We can then determine a length threshold starting from which a web address corresponds to a single item. This length threshold may be continually improved.

The step 102 of applying the character test comprises then first a step 110 of determining a length of the characters string of the tested web address. The length of the characters string of the tested web address is the number of characters forming the web address. For example, if the tested web address is www.nytimes.com, the determined length is 15. If the tested web address is http://www.nytimes.com/2014/07/04/business/jobs-data-for-june-released-by-labor-department.html?hp&action=click&pgtype=Homepage&version=LedeSu m&module=first-column-region&region=top-news&WT.nav=top-news& r=0, the determined length will be 207.

The step 102 of applying the character test comprises then a step 111 of comparing the determined length with the length threshold.

If the determined length is superior to the length threshold, the tested web address is considered as a single item. In that case, the method preferably comprises a step 103 of tagging the tested web address as single item. The method may then comprise a step 104 of recommending the tested web address to users.

On the contrary, if the determined length is inferior to the length threshold, the tested web address is considered as an aggregation portal. In that case, the tested web address is not recommended to users. The method may then comprise a step 108 of tagging the tested web address as aggregation portal. The method may also comprise a step 109 of adding the tested web address to the reference list.

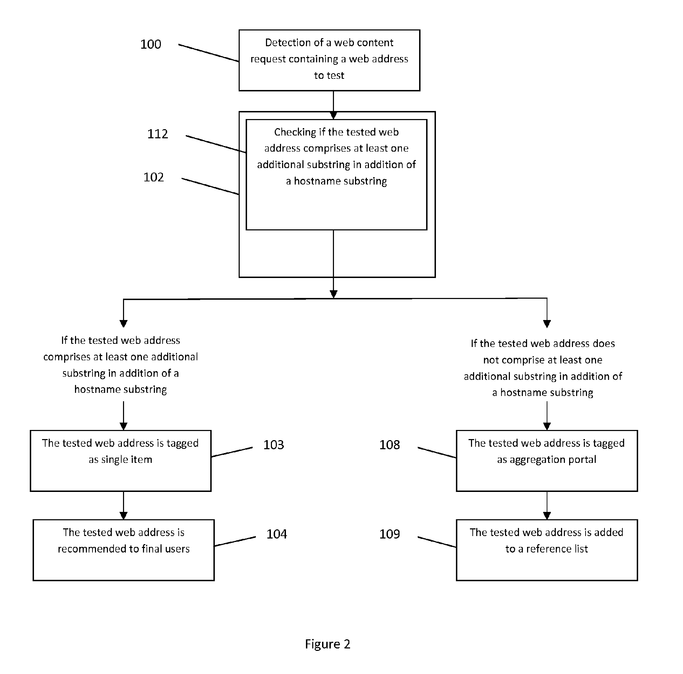

Figure 2 represents a method according to a second embodiment of the invention, that may be applied alone or in combination with the method according to the first embodiment.

The method of figure 2 is similar to the method of figure 1, except that the character test performed on the characters string of the tested web address differs.

More precisely, web addresses traditionally contain a substring of characters corresponding to the hostname of the web page. This substring of characters is named "hostname substring". The hostname substring is generally the domain name, for example www.google.com, where specific web content requests, using the http GET method, need to be addressed. In fact, in order to request a web page with the following web address: www.news/region/news1.html, the web browser issues a GET message towards the hostname www.news.com trying to get the information /region/news1.htlm. Most of the time, aggregation portals have a web address that matches the hostname.

According to this second embodiment, the step of applying the character test comprises first a step of detecting the hostname substring of the tested web address. The step of applying the character test comprises then a step of checking if the characters string of the tested web address is reduced to the hostname substring or if it comprises at least another characters substring. If the tested web address is reduced to the hostname, the characters string of the tested web address is reduced to the hostname substring, the character test has a negative result and the tested web address is considered as being an aggregation portal. On the contrary, if the characters string of the tested web address comprises at least one other characters substring in addition of the hostname substring, the character test has a positive result and the tested web address is considered as corresponding to a single item.

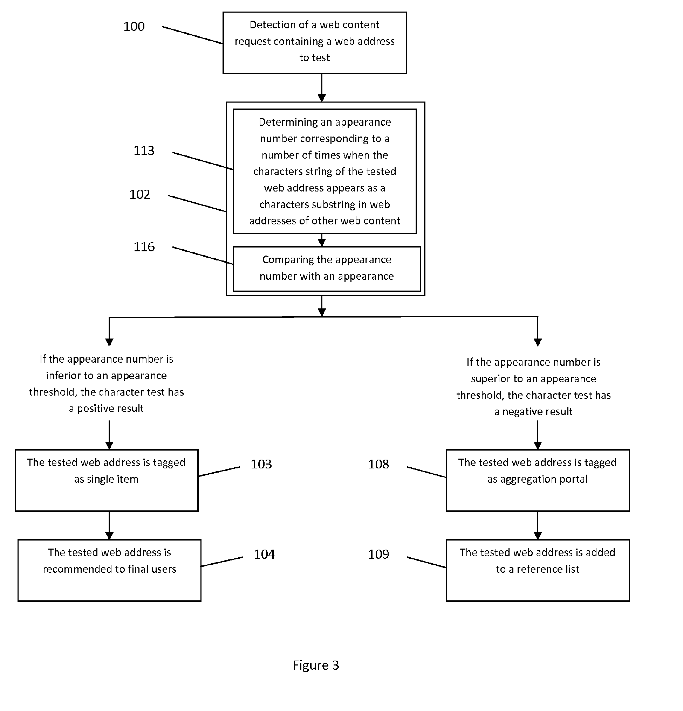

Figure 3 represents a third embodiment, analogous to those of figures 1 and 2 except for the character test. The character test of this third embodiment is based on the fact that the characters string of web addresses corresponding to aggregation portals frequently appears as characters substring of other web addresses. For example, the character string www.nytimes.com frequently appears as characters substring of others web addresses. Consequently, in this embodiment, the step 102 of applying the character test comprises a step 113 of detecting, during a given time, how many web content requests of the stream contain a web address containing as characters substring the characters string of the tested web address. This step 113 enables then to obtain an appearance number corresponding to the number of times where the characters string of the tested web address appears as characters substring of other web addresses. The step 102 of applying the character test comprises a step 116 of comparing the appearance number with an appearance threshold. The appearance threshold is preferably determined during a preliminary learning step wherein the appearance numbers corresponding to web addresses already identified as single item or as aggregation portal are determined.

If the appearance number is inferior to the appearance threshold, the character test has a positive result and the tested web address is considered as a single item. On the contrary, if the appearance number is superior to the appearance threshold, the character test has a negative result and the tested web address is considered as an aggregation portal.

Two or more of the three embodiments described with reference to figures 1 to 3 may be coupled. In that case, a first character test, for example the one of figure 1, may be applied to the tested web address. If this first character test has a positive result, the tested web address is considered as being a single item and no further character test is performed on the tested web address. On the contrary, if the first character test has a negative result, a second character test, for example the one of figure 2, may be applied on the character test. We may then either decide to directly tagged the tested web address as single item or as aggregation portal according to the result of this second character test, but we may also decide that if the second character test has a positive result, the tested web address is tagged as single item, while if the second character test has a negative result, a third character test, for example the one of figure 3, is applied. Note that we have described that a decision was made if each of the character test performed had a positive result, but we can decide the opposite: i.e. if the first character test has a negative result, the tested web address is tagged as single item, while if the first character test has a positive result, a second character test is performed...

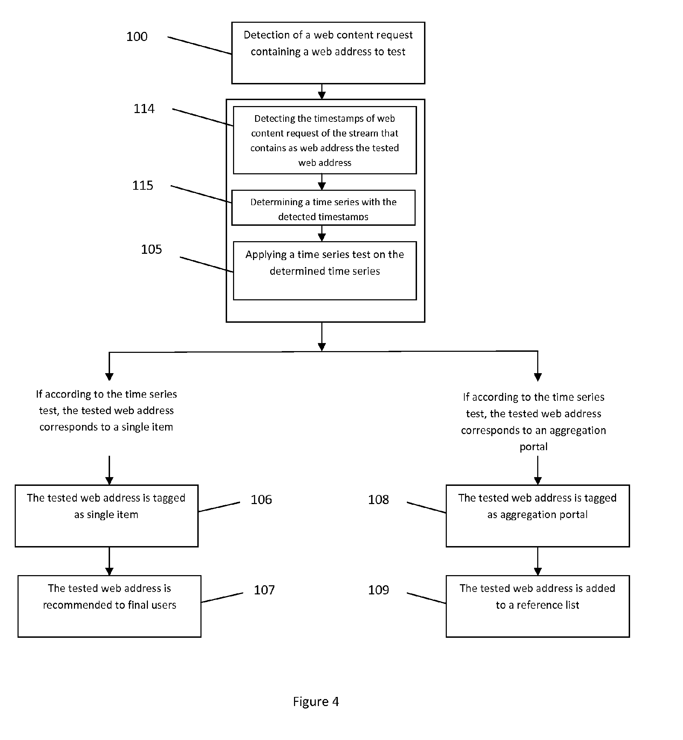

Figure 4 describes a method according to another aspect of the invention. This method may comprise the same steps as the methods described with reference to figures 1 to 3, except for the character test. According to this aspect of this invention, the test applied to decide if we classify the tested web address as corresponding to a single item or to an aggregation portal is not any more based on the features of the character strings forming the tested web address, but it is based on the frequency of appearance of the tested web address in web content requests of the stream.

To that purpose, the method of figure 4 comprises a step 114 of detecting, during a given period, all web content requests of the stream that contain as web address the tested web address, together with their timestamps, i.e. their time of appearance. Thanks to these timestamps, the method comprises then a step 115 of determining a time series of the tested web address. By time series of the tested web address, we mean the evolution of the number of web content requests per units of time that contain as web address the tested web address. This time series represents the frequency of appearance of the tested web address in web content requests of the stream. One way of getting the time series of the tested web address is to discretize the time into buckets, for example of 5 minutes, and to assign to each of these buckets the count of web content requests that contain the tested web address as web address.

The method comprises then a step of applying a test, named time series test on the time series determined for the tested web address. According to a first embodiment, the step of applying the time series test comprises a step of comparing the determined time series with reference times series. Each reference time series corresponds to the frequency of appearance of a web address known as aggregation portal. This step is for example a step of comparing the determined time series with reference time series corresponding to well known aggregation portals, like for example www.google.com or www.nytimes.com. This step of comparison may be performed through the computation of the cross correlation of the two time series that are compared. These two time series are considered as corresponding to one another if the result of the cross correlation is 1, where they are considered as not corresponding to one another if the result of the cross correlation is 0. Consequently, if we find out that the determined time series corresponds to one of the reference time series, the time series test has a negative result and the tested web address is considered as corresponding to an aggregation portal, while if we find out that the determined time series corresponds to none of the reference time series, the tested web address is considered as corresponding to a single item.

According to a second embodiment, simpler than the first one, the step of applying the time series test comprises a step of computing the periodicity of the tested web address. We can then compare the determined periodicity with those corresponding to well known portals. If the determined periodicity corresponds to one of the reference periodicity, the tested web address is considered as corresponding to an aggregation portal, while if the determined periodicity corresponds to none of the reference periodicity, the tested web address is considered as corresponding to a single item. For example, if the determined time series is one-day periodic, then the tested web address is considered as being a portal, otherwise it is considered as being a single item. One way to compute the periodicity is to leverage the fast fourier transform (FFT) of the time signal.

The method according to the first aspect of the invention and the method according to the second aspect of the invention may be used separately or in conjunction.

For example, one way of combining the method according to the first aspect and the method according to the second aspect may consist in using them as features of a classifier enabling to classify the web addresses in two classes: a first class corresponding to the web addresses considered as singles items and a second class corresponding to the web addresses considered as aggregation portals.

Another way of combining the methods according to the first aspect and the method according to the second aspect may consist in implementing the method according to the first aspect online, while implementing the method according to the second aspect offline.

More precisely, this method comprises first a step of detecting web content request containing a web address to test, named as before "tested web address".

As described before, the method may then comprise a first step of comparing the tested web address with each of the web addresses of a reference list stored in a database. The reference list contains web addresses known as corresponding to aggregation portals.

If the tested web address corresponds to one of the web addresses of the reference list, the tested web address is considered as being an aggregation portal.

If the tested web address corresponds to none of the web addresses of the reference list, the method comprises a step of applying a first test on the tested web address. This first test is named "character test". The character test may be one of the character test described with reference to one or several of figures 1 to 3. If the character test has a positive result, the tested web address is considered as corresponding to a single item whereas if the character test has a negative result, the tested web address is considered as potentially corresponding to an aggregation portal.

If the tested web address is considered as potentially corresponding to an aggregation portal, the method comprises a step of applying a time series test as described previously with reference to figure 4. To that purpose, the method comprises the steps of :
- detecting timestamps of web content requests of the stream that contains as web address the tested web address;
- determining a time series with the detected timestamps,
- applying the time series test.

If the time series test has a positive result, the tested web address is tagged as a single item in a step and recommended to users in a step, while if the time series test has a negative result, the tested web address is tagged as aggregation portal and added to to reference list.

While the present invention has been particularly described with reference to the preferred embodiments, it should be readily apparent to those of ordinary skill in the art that changes and modifications in form and details may be made without departing from the scope of the invention. For example, the way of combining the embodiments and the aspect of the invention may differ.

## Claims

1. Method for determining if a web address, named "tested web address", contained in a web content request of a stream of web content requests corresponds to a single item, each web content request comprising a web address and a timestamp, each web address being formed by a characters string, the method comprising the following steps:
- (102) applying a first test, named "character test", on the characters string of the tested web address, the character test having a positive result if the web address is considered as a single item, the character test having a negative result if the web address is considered as an aggregation portal.

2. Method according to claim 1, wherein the step (102) of applying the character test comprises the following steps:
- (110) determining a length of the characters string of the tested web address;
- (111) comparing the determined length with a length threshold;
• if the determined length is superior to the length threshold, the character test has a positive result;
• if the determined length is inferior to the length threshold, the character test has a negative result.

3. Method according to any of the previous claims, wherein each characters string comprises at least a substring, named "hostname substring", corresponding to a hostname, the step (102) of applying the character test comprising the following steps:
- (112) checking if the characters string of the tested web address is reduced to the hostname substring or if it comprises at least one other characters substring;
• if the characters string of the tested web address is reduced to the hostname substring, the character test has a negative result;
• if the characters string of the tested web address comprises at least one other characters substring, the character test has a positive result.

4. Method according to any of the previous claims, wherein the step (102) of applying a character test on the tested web address comprises the following steps:
- (113) determining an appearance number corresponding to a number of times when the characters string of the tested web address appears as a characters substring in web addresses of other web content requests of the stream;
- (116) comparing the appearance number with an appearance threshold;
• if the appearance number is superior to the appearance threshold, the character test has a negative result;
• if the appearance number is inferior to an appearance threshold, the character test has a positive result.

5. Method according to any of the previous claims, further comprising the following steps:
- (114) detecting timestamps of web content requests of the stream that contains as web address the tested web address;
- (115) determining a time series with the detected timestamps,
- (105) applying a second test, named "time series test", on the determined time series, the time series test having a positive result if the tested web address is considered as a single item.

6. Method according to the previous claim, wherein the step (105) of applying the time series test comprises the steps of :
- comparing the determined time series with reference time series;
- if the determined time series corresponds to one of the reference time series, the time series test has a negative result;
- if the determined time series does not correspond to any of the reference time series, the time series test has a positive result.

7. Method according to the previous claim, wherein the step of comparing the determined time series with one of the reference time series comprises a step of:
- computing a cross correlation of the determined time series with each of the reference time series, the determined time series being considered as corresponding to said reference time series if the cross correlation for said reference time series has a result equal to 1, the determined time series being considered as not corresponding to said reference time series if the cross correlation for said reference time series has a result equal to 0.

8. Method according to any of claims 5 to 7, wherein the step of applying the time series test comprises a step of:
- determining a periodicity for the determined time series;
- comparing the determined periodicity with reference periodicities;
- if the determined periodicity corresponds to one of the reference periodicities, the time series test has a negative result;
- if the determined periodicity does not correspond to any of the reference periodicities, the time series test has a positive result.

9. Method according to any of claims 5 to 8, wherein if the time series test and/or the character test has a negative result, the method further comprises a step (109) of adding the tested web address to a reference list.

10. Method according to any of the previous claims, wherein if the character test and/or the time series test has a positive result, the method further comprises a step (106) of recommending the tested web address to users.

11. Device configured to implement the method according to any of the previous claims.
